# EUROPEAN PATENT SPECIFICATION

(11) **EP 4 100 644 B1**
(45) Date of publication and mention of the grant of the patent: **29.11.2023**
(21) Application number: 21706481.5
(22) Date of filing: 05.02.2021
(51) Int. Cl.: F03D 1/06

(54) **INSERT FOR CONNECTING A WIND TURBINE BLADE TO A ROTOR HUB OF A WIND TURBINE**
EINSATZ ZUM VERBINDEN EINER WINDTURBINENSCHAUFEL MIT EINER ROTORNABE EINER WINDTURBINE
INSERT POUR LE RACCORDEMENT D'UNE PALE D'ÉOLIENNE À UN MOYEU DE ROTOR D'UNE ÉOLIENNE

(30) Priority: 06.02.2020 DK PA202070074
(43) Date of publication of application: 14.12.2022
(73) Proprietor: VESTAS WIND SYSTEMS A/S, 8200 Aarhus N (DK)
(72) Inventor: BECH, Anton, 13005 Ciudad Real (ES)
(74) Representative: Vestas Patents Department
(86) International application number: PCT/DK2021/050037
(87) International publication number: WO 2021/155896

(56) References cited:
- EP-A1- 3 390 811
- EP-B1- 3 390 811
- WO-A1-2017/101943
- CN-A- 107 344 422
- JP-A- 2003 293 935
- US-A1- 2019 264 650

## Description

### Technical Field

This invention relates generally to wind turbines, and more particularly to an improved insert positioned in the root end of a wind turbine blade for connecting the blade to a rotor hub of a wind turbine.

### Background

Wind turbine generators are used to produce electrical energy using a renewable resource and without combusting a fossil fuel. A wind turbine generator converts kinetic energy from the wind into electrical energy, and includes a tower, a nacelle mounted atop the tower, a rotor hub rotatably supported by the nacelle, and a plurality of rotor blades attached to the hub. The hub is coupled to a generator housed inside the nacelle. Consequently, as wind forces the blades to rotate, electrical energy is produced by the generator.

In recent years, wind power has become a more attractive alternative energy source and the number of wind turbines, wind farms, etc. has significantly increased, both on land and off-shore. Additionally, the size of wind turbines has also significantly increased, with modern wind turbine blades extending between 50 to 80 meters in length, and the length of wind turbine blades is expected to further increase in the future. The increased length in the wind turbine blades has introduced a number of interesting design considerations for wind turbine designers and manufacturers. For example, with increasing blade length, the joint between the wind turbine blade to the rotor hub may experience increased stresses that present design challenges for ensuring that the joint can withstand the loads expected during the operating life of the wind turbine.

Conventional joints between wind turbine rotor blades and the rotor hub include threaded stud bolts coupled to and extending from the root end of the wind turbine blade, which are in turn coupled to a pitch bearing associated with the rotor hub. Wind turbine blades are typically made from one or more composite materials formed from fibrous material and resin. Such materials generally do not have the structural integrity to provide a secure fixing mechanism into which the threaded stud bolts may be directly inserted. A hole or bore, for example, may be tapped into the composite material at the root end of the wind turbine blade to provide a complementing thread upon which the stud bolt may achieve a connection. However, the composite material has insufficient shear strength to transfer the loads between the blades and hub via the stud bolts and deterioration of the composite material at the interface would occur.

For this reason, it is generally known to utilize internally threaded metal bushings at the interface between the threaded stud bolts and the composite material at the root end of the wind turbine blade. In this regard, tapped bores are typically formed along the circumference of the root end of the wind turbine blade. The metal bushings are then positioned within the tapped bores and adhesively bonded therein to essentially embed the metal bushings within the composite material of the wind turbine blade. The stud bolts are then threadably engaged with the metal bushings in the root end of the blade. The forces acting between the rotor blade and rotor hub act through the stud bolts and thus are transferred via the metal bushings, which operate to more uniformly distribute the forces over the interface area with the softer composite material. The force distribution characteristics provided by the metal inserts in turn provide a connection joint with a structural integrity sufficient to provide a secure connection between the rotor hub and blade during use.

While current connection joints are sufficient to achieve their intended purpose of supporting the loads between the wind turbine blades and rotor hub, one drawback is that as the size of wind turbine blades continues to increase, the size of the connection joint will have to generally increase. Thus, the size of the blade at the root end will have to increase (e.g., larger and larger diameters) and the size of the rotor hub and pitch bearing will have to correspondingly increase, all of which results in significant increases in material and manufacturing costs. Additionally, the number, length and/or diameter of the metal bushings must generally increase to accommodate the shear stresses on the bonding adhesive that joins the metal bushings and composite material. This again increases material and manufacturing costs.

Some attempts have been made to increase the length of the wind turbine blade without increasing the size or diameter of the root end of the blade which interfaces with the rotor hub. For example, one approach uses a "double cone" design to improve the strength of the bushings within the composite material at the root end of the wind turbine blade. Such a double cone bushing is the subject of assignee's EP 3390811. This design seeks to increase the composite-metal surface area by providing two tapered cone regions on the bushing. While such a design provides increased strength at the connection joint between the blade and the rotor hub and is generally successful for its intended purpose, the design calls for a two-piece bushing and a specially formed bore in the composite at the root end of the blade to accommodate the double cone configuration. These factors increase the costs of the manufacturing process through additional parts and relatively complex manufacturing processes. US2019/0264650 also describes connection means for wind turbine blades.

In view of the above drawbacks, manufacturers continually seek improved designs for connection joints between the root end of a wind turbine blade and a rotor hub. More particularly, wind turbine manufacturers seek an improved insert at the root end of a wind turbine blade that provides increased strength and an improved connection joint without the high costs and manufacturing complexities seen in existing connection joints.

### Summary

An improved insert for connecting a wind turbine blade to a rotor hub of a wind turbine is disclosed. The insert includes a bushing with a main body having a first end, a second end, a central bore open to the first end and extending toward the second end, an inner surface, and an outer surface. A plurality of elongate ribs extends from at least one of the inner and outer surfaces of the main body and further extend along at least a portion of a length of the main body. The plurality of ribs on the main body defines a plurality of channels, each channel formed by a section of the at least one of the inner and outer surfaces of the main body and an adjacent pair of the plurality of ribs. The insert further includes a plurality of composite inlays, wherein each composite inlay is positioned within a respective one of the plurality of channels of the bushing.

In one embodiment, the plurality of elongate ribs extends from the outer surface of the main body of the bushing. Alternatively, the plurality of elongate ribs may extend from the inner surface or both the inner and outer surfaces. Each of the plurality of elongate ribs lies within a radial plane through a central axis of the insert. In one embodiment, each of the plurality of elongate ribs has a first end spaced from the first end of the main body and a second end that terminates at the second end of the main body. A height of each of the plurality of elongate ribs may vary along the length of the main body. For example, the height of the plurality of elongate ribs may be substantially zero at the first end of the ribs (e.g., a sharp point) and the height of the plurality of elongate ribs may be a maximum at the second end of the ribs. A width of each of the plurality of channels may vary along the length of the main body. For example, the width of each of the plurality of channels may decrease in a direction toward the second end of the main body. In one embodiment, the outer surface of the main body may include a cylindrical section adjacent the first end of the main body and a conical section adjacent the second end of the main body. Additionally, the inner surface of the main body may include a conical section adjacent the second end of the main body. In other words, the inner and outer surfaces of the main body may be tapered adjacent the second end. In one embodiment, the central bore may include a threaded portion for threadably receiving a stud bolt and an expanded pocket immediately adjacent the threaded portion to relieve stresses on the initial thread when the stud bolt is engaged with the insert.

Each of the plurality of composite inlays may substantially fill the respective one of the plurality of channels in which it is received to give the insert a more regular shape or configuration to the ribbed surface. For example, the insert may include an outer surface formed by the plurality of ribs and the plurality of composite inlays, and in one embodiment the outer surface of the insert may have a cylindrical configuration adjacent the first end of the bushing and a conical configuration adjacent the second end of the bushing. Each of the plurality of composite inlays may include laminates of unidirectional fibers, wherein the unidirectional fibers are generally oriented in a length direction of the insert. In one exemplary embodiment, each of the plurality of composite inlays extends beyond the second end of the bushing to define a tubular extension extending from the second end of the bushing and having an outer surface and an inner surface. The outer surface of the tubular extension may have a conical configuration and the inner surface of the tubular extension may also have a conical configuration.

In one embodiment, the insert further includes an inner composite liner coupled to the inner surface of the insert. For example, the inner liner may be coupled to the inner surface of the bushing (i.e., in the central bore). In another embodiment, the inner composite liner also extends along the inner surface of the tubular extension. In one embodiment, the bushing may be formed from metal such that the insert has a construction including both a metal portion and a composite portion. The insert is configured to have a regular outer surface configuration and in inner surface configuration. By way of example, the outer surface of the insert may have a cylindrical and/or a conical configuration. In a similar manner, the inner surface of the insert may have a cylindrical and/or a conical configuration. The insert is configured to be received within a bore in the root end of the wind turbine blade. The bore may have a regular configuration and be formed without the need for expensive and complex manufacturing processes to match complex insert geometries. Moreover, the insert is configured to be rotationally symmetric such that the insert may be positioned within the bore in any orientation. Although the insert comprises a bushing integrated with some composite material, it may be considered to be a hybrid insert because it has essentially the rotationally symmetrical attribute of a bushing, while nevertheless being configured as an insert.

In a further embodiment, a wind turbine blade includes a plurality of bores formed in the root end of the wind turbine blade and a plurality of inserts, wherein each of the plurality of inserts is as described above and is received within a respective one of the plurality of bores in the root end of the blade. Stud bolts may be threadably attached to each of the inserts for attaching the wind turbine blade to the rotor hub. In yet a further embodiment, a wind turbine includes a wind turbine blade as described above.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a perspective view of a wind turbine in which embodiments of the invention may be used;
Fig. 2 is a perspective view of a wind turbine blade and rotor hub having a connection joint in accordance with an embodiment of the invention;
Fig. 3 is an enlarged perspective view of a root end of a wind turbine blade according to an embodiment of the invention;
Fig. 4 is a disassembled perspective view of an insert in accordance with an embodiment of the invention;
Fig. 5 is an assembled perspective view of the insert shown in Fig. 4;
Fig. 6 is a disassembled cross-sectional view of the insert shown in Fig. 5;
Fig. 7 is a cross-sectional view of the insert shown in Fig. 5 and a bore in the root end of a wind turbine blade;
Fig. 8 is a cross-sectional view of the insert of Fig. 5 positioned within a bore in the root end of the wind turbine blade; and
Fig. 9 is a cross-sectional view of the insert and bore of Fig. 8 taken along line 9-9.

### Detailed Description

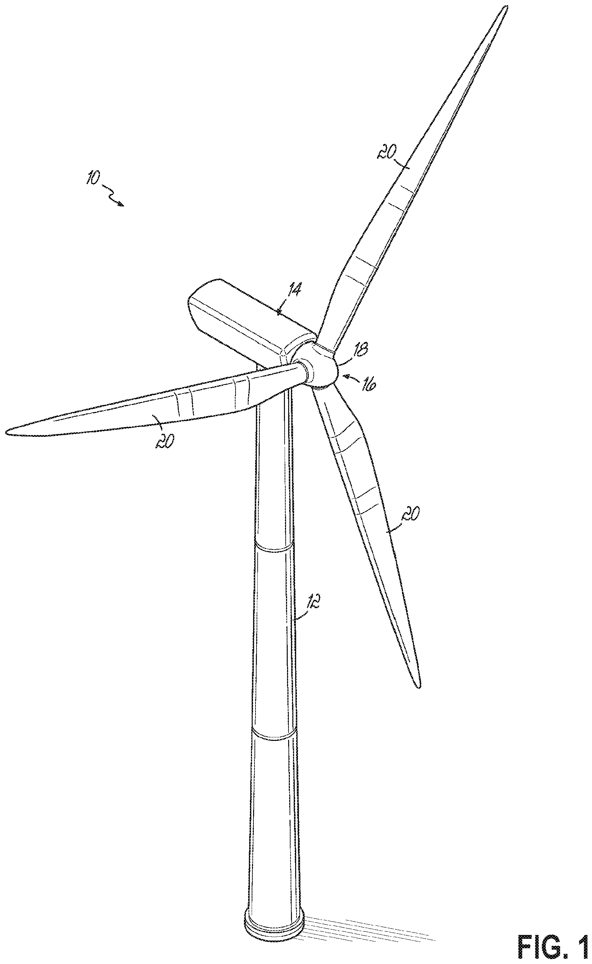

With reference to Fig. 1, a wind turbine 10 includes a tower 12, a nacelle 14 disposed at the apex of the tower 12, and a rotor 16 operatively coupled to a generator (not shown) housed inside the nacelle 14. In addition to the generator, the nacelle 14 may house various components needed to convert wind energy into electrical energy and to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which air currents having lower turbulence and higher velocity are typically found.

The rotor 16 may include a central rotor hub 18 and a plurality of blades 20 attached to the central hub 18 at locations distributed about the circumference of the central hub 18. In the representative embodiment, the rotor 16 includes three blades 20, however the number may vary. The blades 20, which project radially outward from the central rotor hub 18, are configured to interact with passing air currents to produce rotational forces that cause the central hub 18 to spin about its longitudinal axis. The design, construction, and operation of the blades 20 are familiar to a person having ordinary skill in the art of wind turbine design and may include additional functional aspects to optimize performance. For example, pitch angle control of the blades 20 may be implemented by a pitch control mechanism (not shown) responsive to wind velocity to optimize power production in low wind conditions, and to feather the blades if wind velocity exceeds design limitations.

The rotor 16 may be coupled to the gearbox directly or indirectly via a main shaft extending between the rotor hub 18 and the gearbox. The main shaft rotates with the rotor 16 and is supported within the nacelle 14 by a main bearing support which supports the weight of the rotor 16 and transfers the loads on the rotor 16 to the tower 12. The gearbox transfers the rotation of the rotor 16 through a coupling to the generator. Wind exceeding a minimum level may activate the rotor 16, causing the rotor 16 to rotate in a direction substantially perpendicular to the wind, applying torque to the input shaft of the generator.

The wind turbine 10 may be included among a collection of similar wind turbines belonging to a wind farm or wind park that serves as a power generating plant connected by transmission lines with the power grid, such as a three-phase alternating current (AC) power grid. The electrical power produced by the generator may be supplied to a power grid (not shown) or an energy storage system (not shown) for later release to the grid as understood by a person having ordinary skill in the art. The power grid generally consists of a network of power stations, transmission circuits, and substations coupled by a network of transmission lines that transmit the power to loads in the form of end users and other customers of electrical utilities.

As mentioned above, for certain wind turbine designs, the wind turbine blades 20 are coupled to the rotor hub 18 in a manner that allows the blades 20 to rotate or pitch about a longitudinal axis of the blades 20. This is achieved by coupling the root end 22 of a blade 20 to a pitch bearing 23 operatively coupled to the rotor hub 18. The pitch bearing 23 generally includes a ring rotatable relative to the hub 18 to which the root end 22 of the blade 20 is coupled. Pitch bearings are generally well known in the art and thus will not be described in further detail herein.

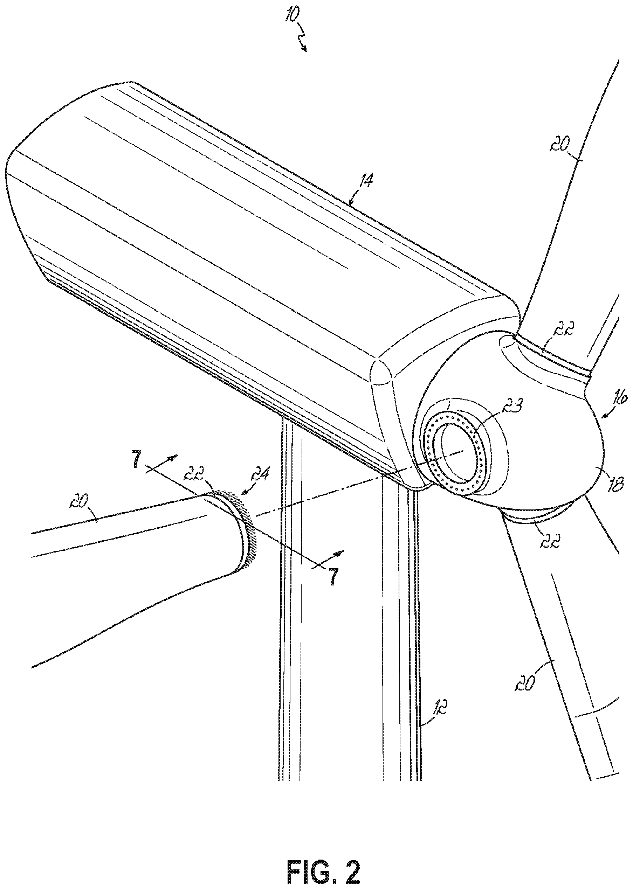

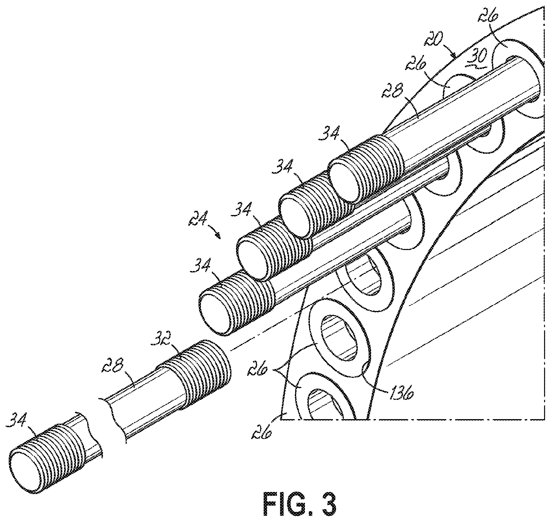

In accordance with an aspect of the invention, and as illustrated in Figs. 2 and 3, a connection joint 24 between a wind turbine blade 20 of the wind turbine 10 and the rotor hub 18 includes a plurality of inserts 26 coupled to the wind turbine blade 20 at the root end 22 thereof, and a plurality of stud bolts 28 configured to be coupled to the inserts 26 in the wind turbine blade 20 and further configured to be coupled to the rotor hub 18 (Fig. 2), such as through the pitch bearing 23. As illustrated in Fig. 3, the inserts 26 may be circumferentially spaced about an end face 30 at the root end 22 of the blade 20 and embedded within the material of the blade 20 such that a connecting end of the insert 26 slightly protrudes (e.g., about 5 mm) from the end face 30 of the blade 20. The inserts 26 themselves and a method for positioning the inserts 26 within the material of the blade 20 will be described more fully below. The number of inserts 26 along the circumference of the root end 22 of the wind turbine blade 20 depends on the size of the blade, among potential other factors, but may be anywhere from 80 to 180 inserts for blades between 50 meters and 80 meters in length. However, it should be realized that more or less inserts 26 may be used depending on the specific application and needs of the manufacturer.

The stud bolts 28 are generally cylindrical elongate members having a threaded blade end 32 and a threaded hub end 34. As illustrated in Fig. 2, during assembly of the wind turbine 10, the stud bolts 28 are threadably engaged with the inserts 26 at the root end 22 of the wind turbine blade 20 such that the threaded hub end 34 of the stud bolts 28 extends away from the root end 22 of the blade 20. The stud bolts 28 are then aligned with corresponding holes in the pitch bearing 23 on the rotor hub 18, inserted therethrough, and secured to the pitch bearing 23 via a threaded fastener or the like. Through the connection joint 24, a wind turbine blade 20 may be securely coupled to the rotor hub 18 of the wind turbine 10 and generally accommodates the loads applied to the wind turbine blades 20 during the operational life of the wind turbine 10.

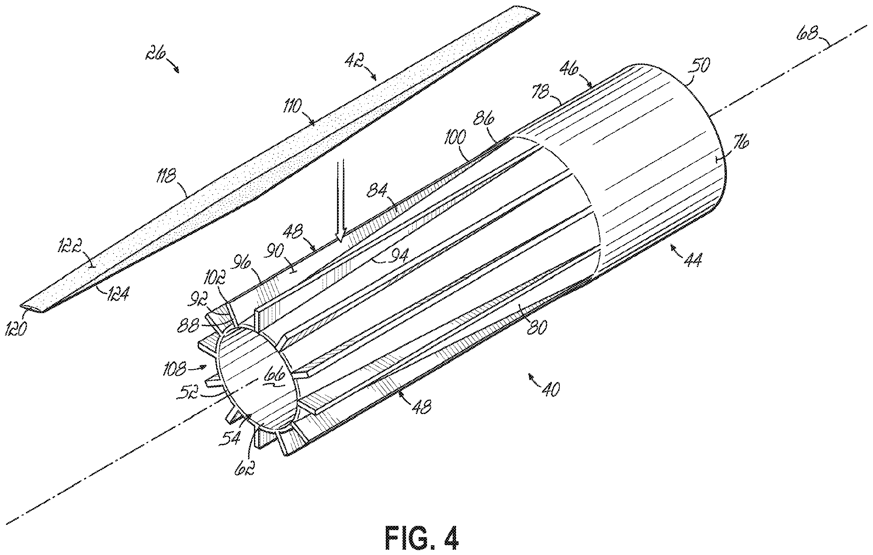

A connection joint 24, and in particular an insert 26 of the connection joint 24, in accordance with an embodiment of the invention is illustrated in Figs. 4-7. Similar to assignee's double-cone embodiment disclosed in EP 3390811, the insert 26 is configured to increase the composite-metal surface area such that the loads being transferred through the connection joint 24 are distributed over a greater area, thereby decreasing peak stresses on the connection joint 24 and extending the fatigue life of the joint 24. The approach taken for insert 26, however, differs from that disclosed in EP 3390811. More particularly, the insert 26 is of a design including both a metal portion 40 and a composite portion 42. The reasons for such a design will become clearer based on the description below. In any event, the metal-composite surface area is increased by providing a plurality of ribs on the metal portion 40 of the insert 26 that interfaces with the composite portion 42 of the insert 26 and potentially the composite material that forms the wind turbine blade 20. As explained in more detail below, the ribs increase metal-composite surface area over which loads through the connection joint 24 are transferred, thereby improving the strength of the connection joint 24.

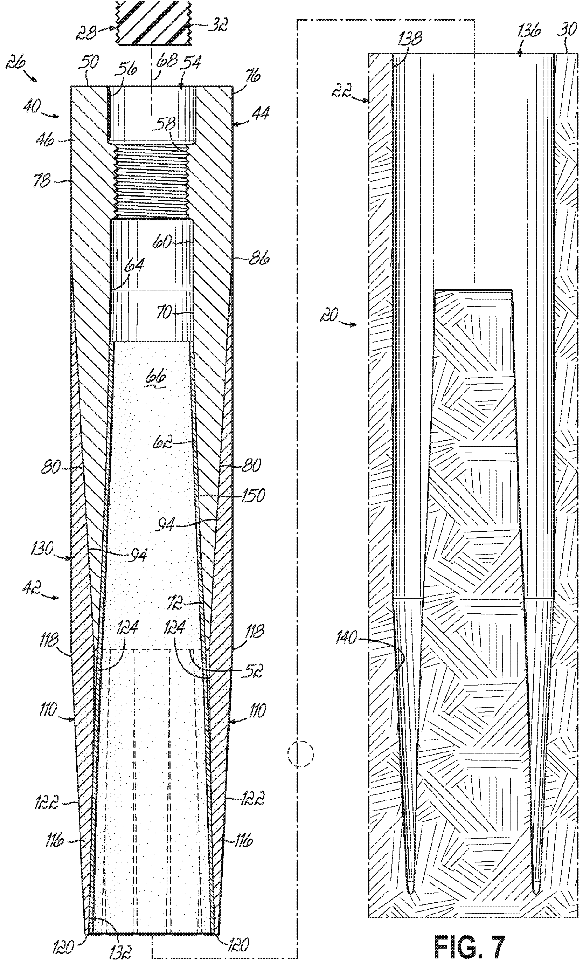

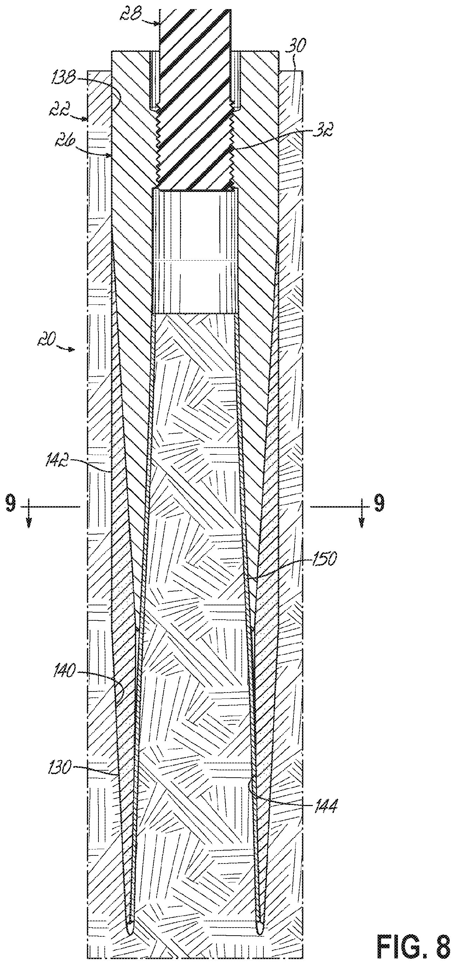

In an exemplary embodiment, the metal portion 40 of the insert 26 includes a metal bushing 44 having a generally cylindrical main body 46 and a plurality of ribs 48 extending along at least a portion of the length of the main body 46. The main body 46 of the insert 26 includes a connecting end 50, a tip end 52, and a central bore 54 extending inwardly from the connecting end 50 and through the main body 46 to the tip end 52. The central bore 54 is configured to receive a stud bolt 28 therein, as illustrated in Figs. 7 and 8. The central bore 54 includes a first inlet portion 56 adjacent the connecting end 50, a second threaded portion 58 adjacent the inlet portion 56, a third expansion portion 60 adjacent the threaded portion 58, and a fourth outlet portion 62 adjacent the third expansion portion 60. It should be recognized that there may be more or less portions of the central bore 54. For example, the third expansion portion 60 may be omitted such that the outlet portion 62 is adjacent the threaded portion 58.

In an exemplary embodiment, the inlet portion 56 of the central bore 54 may be generally circular in cross section, have smooth side walls, and be sized so as to receive the stud bolt 28 therein. Moreover, the length of the inlet portion 56 along the central bore 56 may be between about 0.25D and about 3D, preferably between about 0.5D and about 2D, where D is the major diameter of the threaded blade end 32 of the stud bolt 28 configured to be received in the central bore 56. It should be recognized, however, that other lengths are also possible and remain within the scope of the present invention.

In an exemplary embodiment, the threaded portion 58 of the central bore 54 includes internal threads configured to mesh with the threads on the blade end 32 of the stud bolt 28. By way of example and without limitation, the threaded portion 58 may be configured to receive an M20-M50 threaded stud bolt 28 (and preferably about an M30 or M36 or M42 or similar sized threaded bolt) and have a length along the central bore 54 between about 0.5D and about 3D. Other lengths may also be possible and the invention is not limited to the range above.

In an exemplary embodiment, the expansion portion 60 of the central bore 54 has a cross dimension greater than that of the threaded portion 58, wherein the increase in the size of the cavity immediately adjacent the threads is configured to reduce the stress concentrations at the first thread and more evenly distribute the forces over several threads. The expansion portion 60 may be generally cylindrical with a diameter greater than the diameter of the threaded portion 58 and have smooth side walls. For example, the diameter of the expansion portion 60 may be between about 5% and about 50% greater than the diameter of the threaded portion 58. Moreover, the length of the expansion portion 60 along the central bore 54 may be between 0.1D and 2D or between 0.5D and 1D or between 0.5D and 2D in various embodiments. It should be recognized that the diameter and length of the expansion portion 60 may have other values and remain within the scope of the present invention.

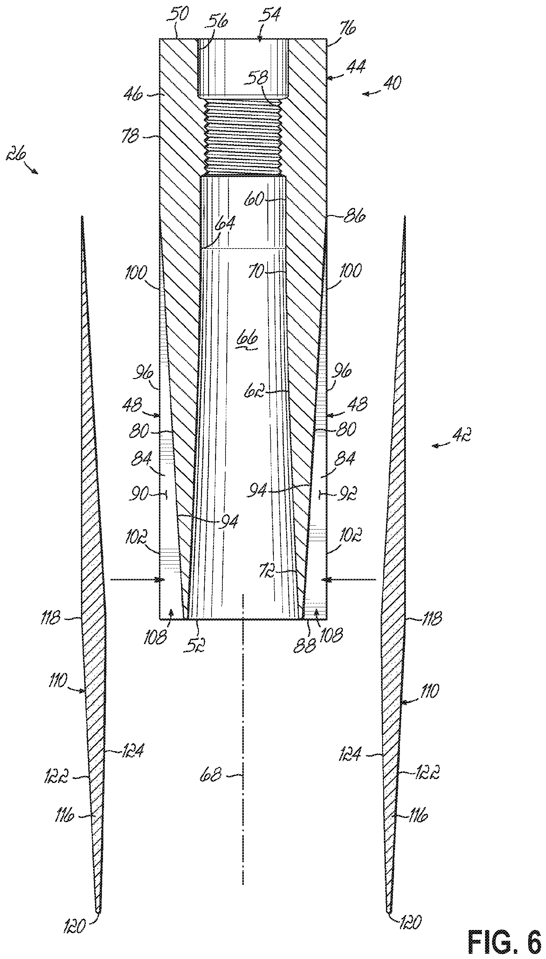

The outlet portion 62 of the central bore 54 includes a proximal end 64 at the outlet of the expansion portion 60 and extends to the tip end 52 of the main body 46. The first end 64 may have a diameter less than that of the expanded portion 60. In one embodiment, the diameter of the outlet portion 62 may be generally constant along the length of the outlet portion 62 to the tip end 52 of the main body 46. Accordingly, the inner surface 66 that defines the outlet portion 62 may be generally parallel to a central axis 68 of the insert 26. In an alternative embodiment, however, and as illustrated in Fig. 6, the diameter of the outlet portion 62 may vary along the length of the outlet portion 62 to the tip end 52 of the main body 46. In an exemplary embodiment, for example, the outlet portion 62 may include a generally cylindrical section 70 adjacent the proximal end 64 wherein the diameter of the outlet portion 62 may be generally constant and a distally adjacent conical portion 72 wherein the inner surface 66 forms an acute angle relative to the central axis 68 of the insert 26. For example, the inner surface 66 may taper outwardly away from the central axis 68 in a range between about 1 degree and about 20 degrees, preferably between about 1 degree and about 10 degrees. In one embodiment, the taper angle may be generally constant along the conical portion 72. In an alternative embodiment, however, the taper angle may vary along the conical portion 72. In a further alternative embodiment, the cylindrical section 70 adjacent the proximal end 64 may be omitted such that inner surface 66 of the outlet portion 62 has a conical configuration from the proximal end 64 to the tip end 52 of the main body 46. In an exemplary embodiment, the length of the outlet portion 62 along the central bore 54 may be between 0.1D and 4D or between 1D and 5D in various embodiments. It should be recognized, however, that the length of the outlet portion 62 may have other values and remain within the scope of the present invention.

In an exemplary embodiment, the outer surface 76 of the main body 46 may be between about 1.5D and about 3D adjacent the connecting end 50 of the main body 46, however other values are possible. In one embodiment, the diameter of the outer surface 76 of the main body 46 may be generally constant along the length of the main body 46 (e.g., a cylindrical configuration). Accordingly, the outer surface 76 of the main body 46 may be generally parallel to the central axis 68 of the insert 26. In an alternative embodiment, however, and as illustrated in the figures, the diameter of the outer surface 76 of the main body 46 may vary along its length. In an exemplary embodiment, for example, the outer surface 76 may include a generally cylindrical section 78 adjacent the connecting end 50 wherein the diameter of the outer surface 76 may be generally constant, and a distally adjacent conical section 80 wherein the outer surface 76 forms an acute angle relative to the central axis 68 of the insert 26.

For example, the outer surface 76 may taper inwardly toward the central axis 68 in a range between about 1 degree and about 20 degrees preferably in a range between about 1 degree and about 10 degrees. In one embodiment, the taper angle may be generally constant along the conical section 80. In an alternative embodiment, however, the taper angle may vary along the conical portion 80. The taper angle on the outer surface 76 of the main body 46 may be the same or different than the taper angle on the inner surface 66 of the outlet portion 62. Additionally, the junction between the cylindrical section 78 and conical section 80 on the outer surface 76 may be the same of different from the junction between the cylindrical section 70 and conical section 72 on the inner surface 66 of the central bore 54. In a further alternative embodiment, the cylindrical section 78 adjacent the connecting end 50 may be omitted such that the outer surface 76 of the main body 46 has a conical configuration from the connecting end 50 to the tip end 52.

In any event, the wall thickness of the main body 46 may decrease in a direction from the connecting end 50 toward the tip end 52. By way of example, the wall thickness may decrease between about 10% and about 80% from the connecting end 50 to the tip end 52. The tip end wall is preferred to be thin, e.g. having a thickness of approximately 3mm or 2mm or less. The tip end wall thickness can be tapered to zero at the very end, for example terminating in a fillet with an angle of between about 20 degrees and 45 degrees. A reduction outside the noted range is also possible. For example, the tip end 52 may be relatively sharp having substantially no thickness at the end of the bushing 44. In an exemplary embodiment and for reasons explained in more detail below, the wall thickness of the main body 46 may be configured to have a maximum along the threaded portion 58 of the central bore 54. Moreover, the length of the main body 46 may be between about 3D and about 10D. The length of the main body 46 may have other values outside of this range, however. In an exemplary embodiment, the main body 46 of the bushing 44 may be formed from metal, such as steel. However, it should be recognized that in alternative embodiments, other types of metals, or even other suitably strong non-metal materials may be used to form the main body 46 of the bushing 44.

As noted above, the bushing 44 further includes a plurality of ribs 48 extending along at least a portion of the length of the main body 46. The ribs 48 may extend along the outer surface 76 of the main body 46, along the inner surface 66 of the central bore 54, or along both the outer surface 76 of the main body 46 and the inner surface 66 of the central bore 54. For sake of brevity, a description of the ribs 48 being disposed on the outer surface 76 of the main body 46 will be provided. One of ordinary skill in the art will understand, however, how to apply aspects of the invention to a plurality of ribs 48 disposed on the inner surface 66 of the central bore 54 based on the detailed description provided below. Thus, an embodiment detailing external and internal ribs will not be provided herein but remains within the scope of the present invention.

Each of the plurality of ribs 48 may be formed from an elongate, relatively thin platelike member 84 having a proximal end 86, distal end 88, opposed side walls 90, 92 and opposed edges 94, 96. The ribs 48 are circumferentially spaced about the main body 46 with the inner edge 94 of each rib 48 coupled to the outer surface 76 of the main body 46. This may be achieved in some embodiments by welding, adhesive or other suitable fastener. Alternatively, and preferably, the ribs may form part of the main body of the bushing. For example, ribs may be generated on the bushing by machining channels on the main body of the bushing. Still alternatively, ribs may be provided on a main body by casting or press-forming. Each rib may extend within a radial plane relative to the central axis 68 of the insert, i.e., the ribs 48 are substantially radially-extending ribs. The number of ribs 48 circumferentially spaced about the outer surface 76 of the main body 46 of the bushing 44 may be between about 8 and about 20, depending on, for example, the size of the bushing 44.lt may be preferred to use 16 ribs or 12 ribs or 18 ribs.. An even spacing between all ribs may be preferred. It should be realized, however, that more or fewer ribs 48 may be provided depending on the particular application. In an exemplary embodiment, the ribs 48 of the bushing 44 may be formed from metal, such as steel. However, it should be recognized that in alternative embodiments, other types of metals, or even other suitably strong non-metal materials may be used to form the ribs 48 of the bushing 44.

The proximal end 86 of the ribs 48 may be positioned adjacent or immediately adjacent the connecting end 50 of the main body 46. In an exemplary embodiment, for example, the proximal end 86 of the ribs 48 may be spaced distally from the connecting end 50 of the main body 46, such as along the threaded portion 58 of the central bore 54 of the main body 46 (i.e., spaced from the connecting end by between 0.5D and 3D). In a similar manner, the distal end 88 of the ribs 48 may be positioned adjacent or immediately adjacent the tip end 52 of the main body 46. In an exemplary embodiment, for example, the distal end 88 of the ribs 48 may extend to the tip end 52 of the main body 46. The inner edge 94 of the ribs 48 may be shaped to mate with the shape of the main body 46 along which it extends. For example, because the outer surface 76 of the main body 46 may be conical along portions of the main body 46, the inner edge 94 of the ribs 46 will generally not be parallel to the central axis 68 of the insert 26. Instead, the inner edge 94 of the ribs 46 will be shaped such that it engages with the outer surface 76 of the main body 46 as the rib 46 extends along the length of the main body 46. Such an arrangement of the proximal end 86, distal end 88, and inner edge 94 is shown in Fig. 6.

The outer edge 96 of the ribs 48 are not necessarily dictated by the shape of the main body 46 but may be dictated by the overall shape desired for the insert 26. In other words, when the inner edge 94 of the ribs 48 are coupled to the main body 46, the outer edge 96 is configured to have a shape that at least in part defines an outer contour of the insert 26. By way of example, the outer edge 96 of the ribs 48 may have a shape that defines an outer contour having a generally cylindrical section 100 and a generally conical section 102. Thus, the outer edge 96 may include a section adjacent the proximal end 86 such that when the ribs 48 are mounted to the main body 46 the outer edge 96 is generally parallel to the central axis 68 of the insert 26, and a distal section such that when the ribs 48 are mounted to the main body 46 the outer edge 96 forms an acute angle relative to the central axis 68 of the insert 26. For example, the outer edge 96 along that distal section may taper inwardly toward the central axis 68 in a range between about 1 degree and about 20 degrees, preferably in a range between about 1 degree and about 10 degrees. In one embodiment, the taper angle may be generally constant along the distal section of the outer edge 96. In an alternative embodiment, however, the taper angle may vary along the distal section of the outer edge 96. The taper angle of the outer edge 96 may be the same or different than the taper angle of the outer surface 76 of the main body 46. Such an arrangement of the outer edge 96 is also shown in Fig. 6.

With the inner edge 94 of the ribs 48 shaped so as to mate with the outer surface 76 of the main body 46 and the outer edge 96 of the ribs 48 shaped to define the desired outer contour of the insert 26, the height of the ribs 48 (i.e., the radial extent of the ribs) may vary between the proximal and distal ends 86, 88. By way of example, the ribs 48 may have a relatively small height at the proximal end (e.g., about zero at a sharp end) and progressively increase in height toward the distal end 88. in one embodiment, the maximum height may be at the distal end 88 of the ribs 48 and be between about 5 mm in height and about 20 mm, preferably between about 8 mm in height and about 16mm. Other height configurations of the ribs 48, however, may also be possible in alternative embodiments. It may be preferred to ribs to be filleted, rounded or tapered down at their outer edges, e.g. at the tipmost edges.

The arrangement of the plurality of ribs 48 disposed on the outer surface 76 of the main body 46 defines a plurality of circumferentially-spaced grooves or channels 108 extending along at least a portion of the length of the main body 46. Each channel 108 is formed by the side wall 90 of a rib 48, a portion of the outer surface 76 of the main body 46, and the side wall 92 of an adjacent rib 48. The shape of the channels 108 is dictated at least in part by the shape of the outer surface 76 of the main body 46 and the configuration of the outer edge 96 of the ribs 48 that define the outer contour of the insert 26. Thus, the height of the channels 108 (e.g., in the radial direction) will generally match the height of the ribs 48. Additionally, the sides of the channels 108 will generally match the circumferential spacing between adjacent ribs 48 as the ribs extend along the main body 46. Thus, in one embodiment, and due to the conical configuration of the main body 46, the sides of the channels 108 may taper inwardly toward each other in a direction toward the distal end 88 of the ribs 48. It should be recognized that other channel configurations may be possible in alternative embodiments and the invention is not limited to the rib and channel configurations shown and described herein.

As one might imagine, forming a plurality of bores in the end face 30 of the root end 22 of the wind turbine blade 20 configured to receive respective ribbed bushings 44 as described above (i.e., just the bushings 44 of Fig. 4) would be a difficult, time consuming, and expensive process that would largely offset the advantages afforded by the ribbed geometry of the bushings 44. Thus, simply using the bushings 44 as the entirety of the inserts 26 is not a workable solution from a pragmatic standpoint. In accordance with an aspect of the invention, this problem may be addressed by providing hybrid inserts 26 having a composite portion 42 in addition to the metal portion 40 provided by the bushing 44 while being rotationally symmetrical. The composite portion 42 is configured such that the formation of the bores in the root end 22 of the wind turbine blade 20 is no more problematic than the processes currently used in blade manufacturing. It is contemplated, for example, that the same bore-forming processes currently used may also be used to form the bores that receive the inserts 26 of the present invention. Thus, the advantages of the ribbed bushing 44 may be utilized without the drawbacks associated with bore formation for the inserts 26.

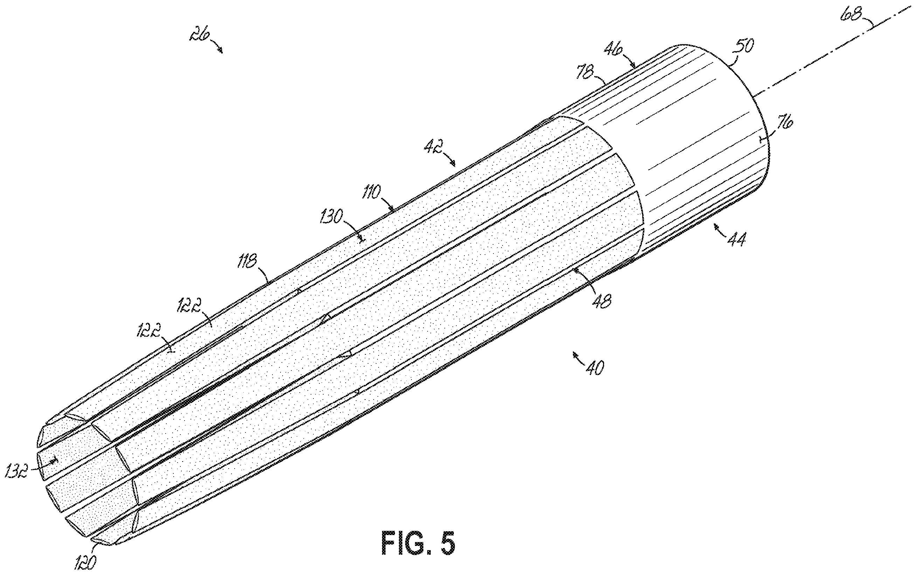

To this end and in accordance with an aspect of the invention, the insert 26 may include a plurality of elongate composite inlays 110, each positioned and secured within a respective one of the channels 108 of the bushing 44. Such an arrangement is illustrated in Figs. 4 and 5. By way of example, the composite inlays 110 may be adhesively bonded within their respective channel 108. In an exemplary embodiment, the composite inlays 110 have a length greater than the length of the channels 108 to define a channel-receiving portion and an extension portion that extends beyond the tip end 52 of the bushing 44. The channel-receiving portion of the composite inlays 110 are shaped to substantially fill the channels 108 defined by the main body 46 and the ribs 48 of the bushing 44 and have the desired outer contour of the insert 26 (e.g., radiused on the radially outer surface). The extension portion of the plurality of composite inlays 110 collectively form a composite tubular extension 116 having a proximal end 118 at the tip end 52 of the bushing 44 and extending distally to an insert tip end 120 (Fig. 5). The tubular extension 116 may have a length between about 1D and about 5D, e.g. between about 2D and 4D. Other lengths, however, are also possible.

The outer surface 122 of the tubular extension 116 may have a shape configured to match the shape of the bore in the root end 22 of the wind turbine blade 20 (Fig. 7). In one embodiment, for example, the outer surface 122 of the tubular extension 116 may be a continuation of the outer contour of the insert 26 along the bushing 44 (e.g., a constant taper angle relative to the central axis 68 of the insert 26). In a similar manner, the inner surface 124 of the tubular extension 116 may have a shape configured to match the shape of the bore in the root end 22 of the wind turbine blade 20 (Fig. 7). In one embodiment, for example, the inner surface 124 of the tubular extension 116 may just be a continuation of the inner surface 66 of the central bore 54 of the bushing 44 (e.g., a constant taper angle relative to the central axis 68 of the insert 26). It should be recognized, however, that the outer and inner surfaces 122, 124 of the tubular extension 116 may have other shapes and configurations and remain within the scope of the present invention.

The composite inlays 110 may be laminates formed from a stack of dry fibrous sheets which are infused with a suitable resin and cured. In one embodiment, the fibrous sheets may include unidirectional fibres or filaments. These may preferably be configured to extend along the longitudinal extent of the elongate composite inlays 110 (i.e., the fibres or filaments extend in a direction generally parallel to the central axis 68 of the insert 26) when the composite inlays 110 are positioned within the channels 108. In one embodiment, a large composite slab may be made having a length generally corresponding to the desired length of the composite inlays 110, a thickness or height generally corresponding to a maximum thickness of the composite inlays 110, and a width that allows for a select number of composite inlays 110 to be formed from the composite slab. The slab is then cut in the longitudinal direction to form the plurality of inlays 110. Fibres or filaments can preferably be glass fibres, carbon fibres or other structural fibres. Blends of fibres e.g. glass and carbon fibres may also be preferred.

Subsequently, the various surfaces of the composite inlays 110 may be subjected to a number of post-formation processes, such as grinding, in order to shape the channel-receiving portion and the extension portion. More particularly, the channel-receiving portion may be shaped to correspond to the shape of the channels 108 in the bushing 44. Moreover, the outer and inner surfaces 122, 124 of the composite inlays 110 along the tubular extension 116 may be shaped in the desired manner (a smooth and continuous extension of the proximal portion of the insert 26). After providing the desired shapes to the plurality of composite inlays 110, the inlays 110 may be positioned within respective channels 108 and secured thereto, such as with a suitable adhesive. The longitudinal slits (if any) between adjacent inlays 100 along the tubular extension 116 are very thin in comparison to the circumferential width of the composite inlays 110 and are filled with adhesive during the bonding process such that the tubular extension 116 is considered a substantially solid tubular member.

With the composite inlays 110 positioned within the channels 108 in the bushing 44, the insert 26 is configured to have a more regular internal and external geometry. For example, the outer surface 130 of the insert 26 may be formed from cylindrical sections (e.g., walls that are generally parallel to the central axis 68 of the insert 26) and/or conical sections (e.g., walls that form acute angles relative to the central axis 68 of the insert 26). In a similar manner at least a portion of the inner surface 132 of the insert 26 has a regular geometry, such as being formed from cylindrical sections and/or conical sections. By providing the insert 26 with outer and inner surfaces 130, 132 having a more regular shape, in particular being rotationally symmetrical, the inserts 26 may be said to be of a hybrid type, more easily positionable within bores formed in the root end 52 of the wind turbine blade 20, which will now be described.

As discussed above, a plurality of inserts 26 are circumferentially spaced about the end face 30 at the root end 22 of the wind turbine blade 20 and embedded in the material, such as a composite material, that forms the root end 22 of the blade 20 (Fig. 3). Thus, in accordance with the invention, after the wind turbine blade 20, or at least the root end thereof, is formed, a plurality of circumferentially spaced bores 136 may be formed in the end face 30 of the root end 22 of the blade 50. The bores 136 are generally configured to correspond in size and shape to the size and shape of the hybrid inserts 26 so that the inserts 26 may be received therein. In this regard, each bore 136 includes a first generally cylindrical cavity portion 138 that extends inwardly from the end face 30 and terminates at a second end. The width (e.g., cross dimension, diameter, etc.) of the bore 136 is just slightly larger than the hybrid insert 26 configured to be received within the bore 136.

The bore 136 further includes an annular cavity 140 having a first end at the second end of the first cavity portion 138 and extending inwardly therefrom and terminating at a second end. In this way, the annular cavity 140 is open to the first cavity portion 138. The configuration of the annular cavity 140 generally corresponds to the configuration of the more distal portions of the insert 26. Thus, in an exemplary embodiment, the annular cavity 140 may include a generally cylindrical configuration or a generally conical configuration to match that of the tubular extension 116. As can be appreciated, the annular cavity 140 should be slightly larger than the insert 26 (e.g., about 0.5 mm spacing) and slightly longer than the insert 26 (e.g., about 5 mm longer) to accommodate the tubular extension 116 and surrounding adhesive.

In one embodiment, the bores 136 may be formed by first tapping the first cavity portion 138 with a suitable drill element or bit. Subsequently, the annular cavity 140 may be formed using appropriately sized hollow drill elements, such as a diamond tipped drill element. Those of ordinary skill in the art may recognize alternative or additional methods for forming the bores 138 in the root end 22 of the wind turbine blade 20 and the invention is not limited to that described herein. Additionally, there may be alternative processes to embed the hybrid inserts 26 within the root end 22 of the wind turbine blade 20. By way of example, the hybrid inserts 26 may be part of a moulding process used to form the blade. Thus, the invention should not be limited to the formation of bores in the root end of the blade for embedding the inserts within the blade.

With the bores 136 formed in the end face 30 at the root end 22 of the wind turbine blade 20, the hybrid inserts 26 may be positioned therein. In this regard, the hybrid inserts 26 may be positioned such that the proximal portion of the main body 46 of the insert 26 is generally positioned in the first cavity portion 138 and the tubular extension 116 of the insert 26 is generally positioned in the annular cavity 140. In an exemplary embodiment, to couple the hybrid inserts 26 to the root end 22 of the wind turbine blade 20, the inserts 26 may be adhesively bonded within the bores 136, such as with a suitable epoxy. This may be achieved, for example, by locating adhesive deposits or packets (not shown) within the gap between the insert 26 and the bore 136. In this way, as the insert 26 is pushed into the bore 136, the insert 26 contacts the adhesive deposit and forces the adhesive to flow along the interface between the insert 26 and the bore 136. The adhesive then cures to secure the insert 26 within the bore 136 of the wind turbine blade 20.

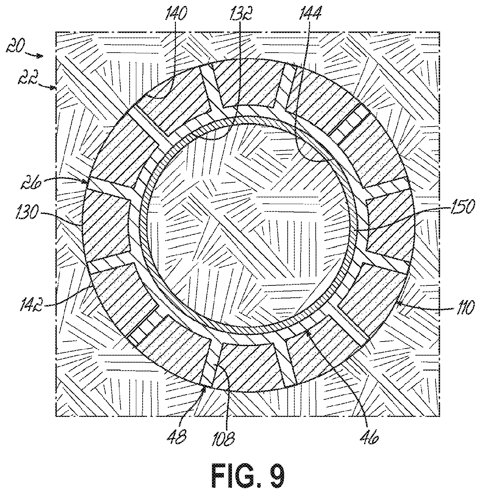

As illustrated in Figs. 8 and 9, when the insert 26 is embedded in the root end 22 of the wind turbine blade 20, the insert 26 defines a bonding interface 142 with the material of the wind turbine blade 20 at the outer surface 130 of the insert 26, including along the outer surface 122 of the tubular extension 116. Moreover, insert 26 defines a bonding interface 144 with the material of the wind turbine blade 20 at the inner surface 132 of the insert 26, including along the inner surface 124 of the tubular extension 116. The bonding interface 144 may also extend along the inner surface 66 of the main body 46 of the bushing 44, as illustrated in the figures. In one embodiment, the composite portion 42 of the insert 26 may further include an inner liner 150 that extends along at least a portion of the inner surface 132 of the insert 26. By way of example, the inner liner 150 may be coupled to extend along the inner surface 66 of the main body 46 of the bushing 44. The inner liner 150 may protect the surface treatment of the metal bushing 44 during manufacturing of the insert 26. As illustrated in the figures, in an exemplary embodiment, the inner liner 150 may also extend along the inner surface 124 of the tubular extension 116 and terminate at the tip end 120 of the insert 26. Thus, the inner liner 150 may extend over both the inner surface 66 of the bushing 44 and the inner surface 124 of the composite tubular extension 116. In one embodiment, the inner liner 150 may be formed from sheets of prepreg fibrous material laid up on a tapered mandrel and then cured to form the inner liner 150. The inner liner 150 may then be adhesively bonded to the inner surface 132 of the insert 26.

As discussed above, to facilitate the coupling of the wind turbine blade 20 to the rotor hub 18 of the wind turbine 10, stud bolts 28 may be inserted into the central bore 54 of the inserts 26 and rotated so as to engage the threads at the blade end 32 of the stud bolts 28 with the threads in the threaded portion 58 of the central bore 54 in the inserts 26. The stud bolts 28 may be inserted into the central bore 54 until the threaded end of the stud bolts 28 are even with or extend beyond the first or most interior thread of the threaded portion 58 and into the expanded pocket 60. Having the end of the stud bolts 28 extend beyond the first thread of the threaded portion 58 and into the expanded pocket 60 provides for a more uniform distribution of forces across the threads and reduces the likelihood of high stress concentrations during use.

The inserts 26 disclosed herein provides a number of advantages. For example, the load paths for transferring the loads on the wind turbine blade 20 to the stud bolts 28 and ultimately to the rotor hub 18 are vastly improved. By way of example, the loads in the composite material of the wind turbine blade 20 are transferred to the composite portion 42 of the inserts 26 at the root end 22 of the blade 20, including the composite inlays 110 and the inner liner 150 (if present). The loads that are transferred to the composite inlays 110 are then transferred to the bushings 44. Notably, however, because of the ribs 48 on the bushings 44, the surface area over which the loads in the composite inlays 110 are transferred to the bushings 44 is significantly increased compared to conventional bushings. This increased surface area lowers the stress concentrations within the inserts 26. Additionally, the ribbed configuration of the bushings 44 increases the contact perimeter at the tip end 52 of the bushings 44 (where stresses may be at their maximum). This increase in contact perimeter in turn increases the load capacity of the connection joint 24 between the wind turbine blade 20 and rotor hub 18. Moreover, the loads in the bushings 44 are transferred to the stud bolts 28 along the threaded portion 58 of the central bore 54. To accommodate the loads at this transfer region, the wall thickness of the bushings 44 are at their maximum in this region.

The scope of the invention is defined by the appended claims.

## Claims

1. An insert (26) for connecting a wind turbine blade (20) to a rotor hub (18) of a wind turbine (10), comprising:
a bushing (44) comprising:
a main body (46) having a first end (50), a second end (52), a central bore (54) open to the first end (50) and extending toward the second end (52), an inner surface (66), and an outer surface (76); and **characterised by**:
a plurality of elongate ribs (48) each extending from at least one of the inner and outer surfaces (66, 76) of the main body (46) and further extending along at least a portion of a length of the main body (46),
wherein the plurality of ribs (48) on the main body (46) defines a plurality of channels (108), each channel (108) formed by a section of the at least one of the inner and outer surfaces (66, 76) of the main body (46) and an adjacent pair of the plurality of ribs (48); and
a plurality of composite inlays (110), each composite inlay (110) positioned within a respective one of the plurality of channels (108) of the bushing (44).

2. The insert (26) of claim 1, wherein each of the plurality of elongate ribs (48) lies within a radial plane through a central axis (68) of the insert (26).

3. The insert (26) of any preceding claim, wherein each of the plurality of elongate ribs (48) has a first end (86) spaced from the first end (50) of the main body (46) and a second end (88) that terminates at the second end (52) of the main body (46).

4. The insert (26) of any preceding claim, wherein a height of each of the plurality of elongate ribs (48) varies along the length of the main body (46).

5. The insert of claim 4, wherein the height of the plurality of elongate ribs (48) is substantially zero at the first end (86) of the ribs (48).

6. The insert (26) of claim 5, wherein the height of the plurality of elongate ribs (48) is a maximum at the second end (88) of the ribs (48).

7. The insert (26) of any preceding claim, wherein a width of each of the plurality of channels (108) varies along the length of the main body (46).

8. The insert (26) of claim 7, wherein the width of each of the plurality of channels (108) decreases in a direction toward the second end (52) of the main body (48).

9. The insert (26) of any preceding claim, wherein the outer surface (76) of the main body (46) includes a cylindrical section (78) adjacent the first end (50) and a conical section (80) adjacent the second end (52).

10. The insert (26) of any preceding claim, wherein the inner surface (66) of the main body (46) includes a conical section (102) adjacent the second end (52).

11. The insert (26) of any preceding claim, wherein the central bore (54) includes a threaded portion (58) for threadably receiving a stud bolt (28) and an expanded pocket (60) immediately adjacent the threaded portion (58).

12. The insert (26) of any preceding claim, wherein each of the plurality of composite inlays (110) substantially fills the respective one of the plurality of channels (108) in which it is received.

13. The insert (26) of any preceding claim, wherein each of the plurality of composite inlays (110) includes unidirectional fibres, wherein the unidirectional fibres are generally oriented in a length direction of the insert (126).

14. A wind turbine blade (20) having a root end (22), comprising:
a plurality of bores (138) formed in the root end (22) of the wind turbine blade (20); and
a plurality of inserts (26) according to any of the preceding claims, wherein each of the plurality of inserts (26) is received within a respective one of the plurality of bores (138) in the root end (22) of the blade (20).

15. A wind turbine (110) comprising a wind turbine blade (20) according to claim 14.

## Patentansprüche

1. Einsatz (26) zum Verbinden eines Windkraftanlagenblattes (20) mit einer Rotornabe (18) einer Windkraftanlage (10), umfassend:
eine Buchse (44), umfassend:
einen Hauptkörper (46), der ein erstes Ende (50), ein zweites Ende (52), eine zentrale Bohrung (54), die zum ersten Ende (50) hin offen ist und sich zum zweiten Ende (52) hin erstreckt, eine Innenfläche (66) und eine Außenfläche (76) aufweist; und **gekennzeichnet durch**:
eine Vielzahl von länglichen Rippen (48), die sich jeweils von mindestens einer der inneren und äußeren Oberflächen (66, 76) des Hauptkörpers (46) aus erstrecken und sich weiter entlang mindestens eines Abschnitts einer Länge des Hauptkörpers (46) erstrecken,
wobei die Vielzahl von Rippen (48) auf dem Hauptkörper (46) eine Vielzahl von Kanälen (108) definiert, wobei jeder Kanal (108) durch einen Abschnitt der inneren und/oder der äußeren Oberfläche (66, 76) des Hauptkörpers (46) und ein benachbartes Paar der Vielzahl von Rippen (48) gebildet wird; und
eine Vielzahl von Verbundstoffeinlagen (110), wobei jede Verbundstoffeinlage (110) in einem entsprechenden der Vielzahl von Kanälen (108) der Buchse (44) positioniert ist.

2. Einsatz (26) nach Anspruch 1, wobei jede der Vielzahl von länglichen Rippen (48) innerhalb einer radialen Ebene durch eine Mittelachse (68) des Einsatzes (26) liegt.

3. Einsatz (26) nach einem der vorstehenden Ansprüche, wobei jede der Vielzahl von länglichen Rippen (48) ein erstes Ende (86), das von dem ersten Ende (50) des Hauptkörpers (46) beabstandet ist, und ein zweites Ende (88) aufweist, das an dem zweiten Ende (52) des Hauptkörpers (46) endet.

4. Einsatz (26) nach einem der vorstehenden Ansprüche, wobei die Höhe jeder der Vielzahl von länglichen Rippen (48) entlang der Länge des Hauptkörpers (46) variiert.

5. Einsatz nach Anspruch 4, wobei die Höhe der Vielzahl von länglichen Rippen (48) am ersten Ende (86) der Rippen (48) im Wesentlichen Null ist.

6. Einsatz (26) nach Anspruch 5, wobei die Höhe der Vielzahl von länglichen Rippen (48) am zweiten Ende (88) der Rippen (48) ein Maximum ist.

7. Einsatz (26) nach einem der vorstehenden Ansprüche, wobei die Breite jedes der Vielzahl von Kanälen (108) entlang der Länge des Hauptkörpers (46) variiert.

8. Einsatz (26) nach Anspruch 7, wobei die Breite jedes der Vielzahl von Kanälen (108) in Richtung zum zweiten Ende (52) des Hauptkörpers (48) hin abnimmt.

9. Einsatz (26) nach einem der vorstehenden Ansprüche, wobei die Außenfläche (76) des Hauptkörpers (46) einen zylindrischen Abschnitt (78) neben dem ersten Ende (50) und einen konischen Abschnitt (80) neben dem zweiten Ende (52) einschließt.

10. Einsatz (26) nach einem der vorstehenden Ansprüche, wobei die Innenfläche (66) des Hauptkörpers (46) einen konischen Abschnitt (102) neben dem zweiten Ende (52) einschließt.

11. Einsatz (26) nach einem der vorstehenden Ansprüche, wobei die zentrale Bohrung (54) einen Gewindeabschnitt (58) zur Aufnahme eines Stehbolzens (28) und eine erweiterte Tasche (60) unmittelbar neben dem Gewindeabschnitt (58) einschließt.

12. Einsatz (26) nach einem der vorstehenden Ansprüche, wobei jede der Vielzahl von Verbundstoffeinlagen (110) den jeweiligen der mehreren Kanäle (108), in dem sie aufgenommen ist, im Wesentlichen ausfüllt.

13. Einsatz (26) nach einem der vorstehenden Ansprüche, wobei jede der Vielzahl von Verbundstoffeinlagen (110) unidirektionale Fasern einschließt, wobei die unidirektionalen Fasern im Allgemeinen in einer Längsrichtung des Einsatzes (126) ausgerichtet sind.

14. Windkraftanlagenblatt (20), das ein Wurzelende (22) aufweist, umfassend:
eine Vielzahl von Bohrungen (138), die im Fußende (22) des Windkraftanlagenblattes (20) gebildet sind; und
eine Vielzahl von Einsätzen (26) nach einem der vorstehenden Ansprüche, wobei jeder der Vielzahl von Einsätzen (26) in einer entsprechenden der Vielzahl von Bohrungen (138) im Wurzelende (22) des Blattes (20) aufgenommen ist.

15. Windkraftanlage (110) umfassend ein Windkraftanlagenblatt (20) nach Anspruch 14.

## Revendications

1. Insert (26) pour relier une pale d'éolienne (20) à un moyeu de rotor (18) d'une éolienne (10), comprenant :
une douille (44) comprenant :
un corps principal (46) comportant une première extrémité (50), une seconde extrémité (52), un alésage central (54) ouvert à la première extrémité (50) et s'étendant vers la seconde extrémité (52), une surface intérieure (66), et une surface extérieure (76) ; et **caractérisé par** :
une pluralité de nervures allongées (48) s'étendant chacune d'au moins l'une des surfaces intérieure et extérieure (66, 76) du corps principal (46) et en outre s'étendant le long d'au moins une partie d'une longueur du corps principal (46),
dans lequel la pluralité de nervures (48) sur le corps principal (46) définit une pluralité de canaux (108), chaque canal (108) étant formé par une section de l'au moins une des surfaces intérieure et extérieure (66, 76) du corps principal (46) et une paire adjacente de la pluralité de nervures (48) ; et
une pluralité d'incrustations composites (110), chaque incrustation composite (110) étant positionnée à l'intérieur de l'un respectif de la pluralité de canaux (108) de la douille (44).

2. Insert (26) selon la revendication 1, dans lequel chacune de la pluralité de nervures allongées (48) se trouve dans un plan radial à travers un axe central (68) de l'insert (26).

3. Insert (26) selon l'une quelconque des revendications précédentes, dans lequel chacune de la pluralité de nervures allongées (48) comporte une première extrémité (86) espacée de la première extrémité (50) du corps principal (46) et une seconde extrémité (88) qui se termine à la seconde extrémité (52) du corps principal (46).

4. Insert (26) selon l'une quelconque des revendications précédentes, dans lequel une hauteur de chacune de la pluralité de nervures allongées (48) varie le long de la longueur du corps principal (46).

5. Insert selon la revendication 4, dans lequel la hauteur de la pluralité de nervures allongées (48) est sensiblement égale à zéro à la première extrémité (86) des nervures (48).

6. Insert (26) selon la revendication 5, dans lequel la hauteur de la pluralité de nervures allongées (48) est à un maximum à la seconde extrémité (88) des nervures (48).

7. Insert (26) selon l'une quelconque des revendications précédentes, dans lequel une largeur de chacun de la pluralité de canaux (108) varie le long de la longueur du corps principal (46).

8. Insert (26) selon la revendication 7, dans lequel la largeur de chacun de la pluralité de canaux (108) diminue dans une direction vers la seconde extrémité (52) du corps principal (48).

9. Insert (26) selon l'une quelconque des revendications précédentes, dans lequel la surface extérieure (76) du corps principal (46) inclut une section cylindrique (78) adjacente à la première extrémité (50) et une section conique (80) adjacente à la seconde extrémité (52).

10. Insert (26) selon l'une quelconque des revendications précédentes, dans lequel la surface intérieure (66) du corps principal (46) inclut une section conique (102) adjacente à la seconde extrémité (52).

11. Insert (26) selon l'une quelconque des revendications précédentes, dans lequel l'alésage central (54) inclut une partie filetée (58) pour recevoir par filetage un goujon (28) et une poche étendue (60) immédiatement adjacente à la partie filetée (58).

12. Insert (26) selon l'une quelconque des revendications précédentes, dans lequel chacune de la pluralité d'incrustations composites (110) remplit sensiblement l'un respectif de la pluralité de canaux (108) dans lequel elle est reçue.

13. Insert (26) selon l'une quelconque des revendications précédentes, dans lequel chacune de la pluralité d'incrustations composites (110) inclut des fibres unidirectionnelles, dans lequel les fibres unidirectionnelles sont généralement orientées dans une direction de longueur de l'insert (126).

14. Pale d'éolienne (20) comportant une extrémité de pied (22), comprenant :
une pluralité d'alésages (138) formés dans l'extrémité de pied (22) de la pale d'éolienne (20) ; et
une pluralité d'inserts (26) selon l'une quelconque des revendications précédentes, dans laquelle chacun de la pluralité d'inserts (26) est reçu à l'intérieur de l'un respectif de la pluralité d'alésages (138) dans l'extrémité de pied (22) de la pale (20).

15. Éolienne (110) comprenant une pale d'éolienne (20) selon la revendication 14.
